# EUROPEAN PATENT APPLICATION

(11) **EP 1 308 820 A2**
(43) Date of publication of application: **07.05.2003**
(21) Application number: 01309273.9
(22) Date of filing: 31.10.2001
(51) Int. Cl.: G06F 1/00

(54) **Encrypted program distribution system using computer network**

(30) Priority: 31.10.2000 JP 2000332068
(71) Applicant: Kabushiki Kaisha Toshiba, Tokyo 105-8001 (JP)
(72) Inventor: Hashimoto, Mikio, c/o Intell. Prop. Division, Minato-ku, Tokyo (JP); Shirakawa, Kenji, c/o Intell. Prop. Division, Minato-ku, Tokyo (JP); Shimojo, Yoshimitsu, c/o Intell. Prop. Division, Minato-ku, Tokyo (JP); Teramoto, Keiichi, c/o Intell. Prop. Division, Minato-ku, Tokyo (JP); Fujimoto, Kensaku, c/o Intell. Prop. Division, Minato-ku, Tokyo (JP); Ozaki, Satoshi, c/o Intell. Prop. Division, Minato-ku, Tokyo (JP)
(74) Representative: Granleese, Rhian Jane

(57) **Abstract**

In a program distribution system including a source file sending device (10), an encrypted program distribution device (102) and an execution file receiving device (103), which are interconnected through a network (105), the encrypted program distribution device (102) examines the source file received from the source file sending device (101), and when the source file passes an examination, an execution file of the program is generated from the source file, a public key which is either unique to an execution file receiving device (103) or unique to a processor of the execution file receiving device (103) is received from the execution file receiving device (103) through the network (105), at least a part of the execution file is encrypted by using the public key, and the execution file is sent to the execution file receiving device (103).

## Description

The present invention relates to an encrypted program distribution system for realizing verification, distribution and bug information feedback for an encrypted program with guaranteed safety.

In general, the high level language such as C language is often used in the program developing. The execution file is generated by compiling and linking the source file written in this high level language.

The compiled and linked execution file contains data that will placed on a memory and data that will not be placed on a memory but that will be directly interpreted by a program loader. The former data includes machine language instruction sequences that are directly readable and executable by the CPU and data that will not be executed as instructions.

Here, it is assumed that the execution file includes machine language instruction sequences but does not include data written by language other than the machine language such as shell script.

In recent years, the illegal analysis and alteration of the software (program) are becoming the problem. A microprocessor with a function for encrypting programs and data (which will be referred to as a tamper resistant processor) as disclosed in the co-pending commonly assigned U.S. patent application serial No. 09/781,284 is one possible solution of this problem.

In such a tamper resistant processor, the illegal analysis and alteration are prevented by the encryption of the execution codes and data by hardware. Its safety level depends on the safety level of the secret key embedded in the processor chip.

However, in this type of tamper resistant processor, different unique keys are often used for different chips in order to deal with the case where a key of some processor is revealed.

In such a case, at least a part of the encrypted execution program must have a portion dependent on the unique key of the tamper resistant processor chip. For the distribution of such an execution program which is different for different tamper resistant processor chips, the distribution by network is suitable.

On the other hand, the programs distributed through a network face with threat of computer virus or worm. Although the fact that some program is not harmful can be passively verified by checking the signature and identity of the distributor, in general it is difficult to judge whether the program distributing entity is sufficiently trustworthy or not.

This problem exists regardless of whether the program is charged or not. In particular, nowadays a virtually countless number of companies and individuals are developing softwares, and these include many useful but not so famous softwares.

Consequently, judging the safety of the software solely according to how famous the software developer is can result in locking out many useful softwares.

The so called virus inspection program of a kind that directly analyzes the execution codes of the software can verify the safety of the program directly distributed through a network even though there are some limits.

However, in the environment of using the tamper resistant processor mentioned above, the program is encrypted according to the key unique to the chip of each tamper resistant processor, so that it has been difficult to verify the safety by using the general purpose virus inspection program.

Also, in conjunction with the spread of softwares, there is a tendency for these softwares to handle various privacy information of users. On the other hand, programs such as computer virus have also appeared. Also, the illegal reading of a secret contained in the computer software is occurring frequently.

Also, in the case of the program using the utilization fee charging scheme, a portion for notifying the charging information to a charging server needs to be safe against the analysis and alteration by users. In addition, there is a need to prevent the illegal copying in the case of delivering the copyright protected contents to user systems.

Here, the protection of the user who actually uses the program is difficult in the environment in which the program protection is cryptographically guaranteed, such as the environment to which the tamper resistant processor is introduced, because the encrypted program acquired by the user cannot be verified before its execution.

As described, in the system utilizing the tamper resistant processor that requires a specific environment under which the encrypted program can be executed, the program is encrypted by using the key unique to the chip of each tamper resistant processor so that the content of its execution file cannot be verified.

Also, in the case of utilizing the tamper resistant processor, the verification as to whether or not a given program can potentially be a computer virus or worm has been difficult because the tamper resistant processors have mutually different unique keys.

Also, there has been no mechanism for distributing the encrypted program via a network to the tamper resistant processor, and it has been difficult to provide the trouble information of the encrypted program to the program developer while protecting the secret information of the user.

It is therefore an object of the present invention to provide a program distribution system capable of realizing distribution, verification and trouble information feedback of an encrypted program with guaranteed safety, surely at lower cost compared with the prior art, by utilizing a computer network.

According to one aspect of the present invention there is provided a program distribution system, comprising a source file sending device, an encrypted program distribution device and an execution file receiving device, which are interconnected through a network; the source file sending device having: a first sending unit configured to send a source file of a program to the encrypted program distribution device; the encrypted program distribution device having: a first receiving unit configured to receive the source file sent from the source file sending device; an examination unit configured to examine the source file received by the first receiving unit; an execution file generation unit configured to generate an execution file of the program from the source file examined by the examination unit, when the source file passes an examination by the examination unit; a public key receiving unit configured to receive a public key which is either unique to the execution file receiving device or unique to a processor of the execution file receiving device, from the execution file receiving device, when the source file passes an examination by the examination unit; an encryption unit configured to encrypt at least a part of the execution file by using the public key received by the public key receiving unit, when the source file passes an examination by the examination unit; and a second sending unit configured to send the execution file encrypted by the encryption unit to the execution file receiving device, when the source file passes an examination by the examination unit; and the execution file receiving device having: a public key sending unit configured to send the public key to the encrypted program distribution device; a second receiving unit configured to receive the execution file sent from the encrypted program distribution device; and a decryption unit configured to decrypt the execution file received by the second receiving unit by using a secret key corresponding to the public key.

According to another aspect of the present invention there is provided a program distribution system, comprising a source file sending device, an encrypted program distribution device and an execution file receiving device, which are interconnected through a network; the source file sending device having: a first sending unit configured to send a source file of a program to the encrypted program distribution device; the encrypted program distribution device having: a first receiving unit configured to receive the source file sent from the source file sending device; an examination unit configured to examine the source file received by the first receiving unit; an execution file generation unit configured to generate an execution file of the program from the source file examined by the examination unit, when the source file passes an examination by the examination unit; a first encryption unit configured to encrypt at least a part of the execution file by using a prescribed secret key, when the source file passes an examination by the examination unit; a public key receiving unit configured to receive a public key which is either unique to the execution file receiving device or unique to a processor of the execution file receiving device, from the execution file receiving device, when the source file passes an examination by the examination unit; a second encryption unit configured to encrypt the prescribed secret key by using the public key received by the public key receiving unit, when the source file passes an examination by the examination unit; and a second sending unit configured to send the execution file encrypted by the first encryption unit and the prescribed secret key encrypted by the second encryption unit to the execution file receiving device, when the source file passes an examination by the examination unit; and the execution file receiving device having: a public key sending unit configured to send the public key to the encrypted program distribution device; a second receiving unit configured to receive the execution file and the prescribed secret key sent from the encrypted program distribution device; and a first decryption unit configured to decrypt the prescribed secret key received by the second receiving unit by using a secret key corresponding to the public key; and a second decryption unit configured to decrypt the execution file received by the second receiving unit by using the prescribed secret key decrypted by the first decryption unit.

According to another aspect of the present invention there is provided an encrypted program distribution device, comprising: a receiving unit configured to receive a source file of a program sent from a source file sending device through a network; an examination unit configured to examine the source file received by the first receiving unit; an execution file generation unit configured to generate an execution file of the program from the source file examined by the examination unit, when the source file passes an examination by the examination unit; a public key receiving unit configured to receive a public key which is either unique to an execution file receiving device or unique to a processor of the execution file receiving device, from the execution file receiving device through the network, when the source file passes an examination by the examination unit; an encryption unit configured to encrypt at least a part of the execution file by using the public key received by the public key receiving unit, when the source file passes an examination by the examination unit; and a sending unit configured to send the execution file encrypted by the encryption unit to the execution file receiving device, when the source file passes an examination by the examination unit.

According to another aspect of the present invention there is provided an encrypted program distribution device, comprising: a receiving unit configured to receive a source file of a program sent from a source file sending device through a network; an examination unit configured to examine the source file received by the first receiving unit; an execution file generation unit configured to generate an execution file of the program from the source file examined by the examination unit, when the source file passes an examination by the examination unit; a first encryption unit configured to encrypt at least a part of the execution file by using a prescribed secret key, when the source file passes an examination by the examination unit; a public key receiving unit configured to receive a public key which is either unique to an execution file receiving device or unique to a processor of the execution file receiving device, from the execution file receiving device through the network, when the source file passes an examination by the examination unit; a second encryption unit configured to encrypt the prescribed secret key by using the public key received by the public key receiving unit, when the source file passes an examination by the examination unit; and a sending unit configured to send the execution file encrypted by the first encryption unit and the prescribed secret key encrypted by the second encryption unit to the execution file receiving device, when the source file passes an examination by the examination unit.

According to another aspect of the present invention there is provided a program distribution method in a program distribution system comprising a source file sending device, an encrypted program distribution device and an execution file receiving device, which are interconnected through a network, the method comprising:
(a) sending a source file of a program from the source file sending device to the encrypted program distribution device; (b) receiving the source file sent from the source file sending device at the encrypted program distribution device; (c) examining the source file received by the step
(b) at the encrypted program distribution device; (d) generating an execution file of the program from the source file examined by the step (c), at the encrypted program distribution device, when the source file passes an examination by the step (c); (e) receiving a public key which is either unique to the execution file receiving device or unique to a processor of the execution file receiving device and which is from the execution file receiving device, at the encrypted program distribution device, when the source file passes an examination by the step (c); (f) encrypting at least a part of the execution file by using the public key received by the step (e), at the encrypted program distribution device, when the source file passes an examination by the step (c); (g) sending the execution file encrypted by the step (f) from the encrypted program distribution device to the execution file receiving device, when the source file passes an examination by the step (c); (h) receiving the execution file sent from the encrypted program distribution device at the execution file receiving device; and (i) decrypting the execution file received by the step (h) by using a secret key corresponding to the public key at the execution file receiving device.

According to another aspect of the present invention there is provided a program distribution method in a program distribution system comprising a source file sending device, an encrypted program distribution device and an execution file receiving device, which are interconnected through a network, the method comprising:
(a) sending a source file of a program from the source file sending device to the encrypted program distribution device; (b) receiving the source file sent from the source file sending device at the encrypted program distribution device; (c) examining the source file received by the step
(b) at the encrypted program distribution device; (d) generating an execution file of the program from the source file examined by the step (c), at the encrypted program distribution device, when the source file passes an examination by the step (c); (e) encrypting at least a part of the execution file by using a prescribed secret key, at the encrypted program distribution device, when the source file passes an examination by the step (c); (f) receiving a public key which is either unique to the execution file receiving device or unique to a processor of the execution file receiving device and which is sent from the execution file receiving device, at the encrypted program distribution device, when the source file passes an examination by the step (c); (g) encrypting the prescribed secret key by using the public key received by the step (f), at the encrypted program distribution device, when the source file passes an examination by the step (c); (h) sending the execution file encrypted by the step (e) and the prescribed secret key encrypted by the step (g) from the encrypted program distribution device to the execution file receiving device, when the source file passes an examination by the step (c); (i) receiving the execution file and the prescribed secret key sent from the encrypted program distribution device at the execution file receiving device; (j) decrypting the prescribed secret key received by the step (i) by using a secret key corresponding to the public key at the execution file receiving device; and (k) decrypting the execution file received by the step (i) by using the prescribed secret key decrypted by the step (j) at the execution file receiving device.

According to another aspect of the present invention there is provided a program distribution method, comprising: (a) receiving a source file of a program sent from a source file sending device through a network; (b) examining the source file received by the step (a); (c) generating an execution file of the program from the source file examined by the step (b), when the source file passes an examination by the step (b); (d) receiving a public key which is either unique to an execution file receiving device or unique to a processor of the execution file receiving device, from the execution file receiving device through the network, when the source file passes an examination by the step (b); (e) encrypting at least a part of the execution file by using the public key received by the step (d), when the source file passes an examination by the step (b); and (f) sending the execution file encrypted by the step (e) to the execution file receiving device, when the source file passes an examination by the step (b).

According to another aspect of the present invention there is provided a program distribution method, comprising: (a) receiving a source file of a program sent from a source file sending device through a network; (b) examining the source file received by the step (a); (c) generating an execution file of the program from the source file examined by the step (b), when the source file passes an examination by the step (b); (d) encrypting at least a part of the execution file by using a prescribed secret key, when the source file passes an examination by the step (b); (e) receiving a public key which is either unique to an execution file receiving device or unique to a processor of the execution file receiving device, from the execution file receiving device through the network, when the source file passes an examination by the step (b); (f) encrypting the prescribed secret key by using the public key received by the step (e), when the source file passes an examination by the step (b); and (g) sending the execution file encrypted by the step (d) and the prescribed secret key encrypted by the step (f) to the execution file receiving device, when the source file passes an examination by the step (b).

According to another aspect of the present invention there is provided a computer program product for causing a computer to function as an encrypted program distribution device, the computer program product comprising: first computer program codes for causing the computer to receive a source file of a program sent from a source file sending device through a network; second computer program codes for causing the computer to examine the source file received by the first computer program codes; third computer program codes for causing the computer to generate an execution file of the program from the source file examined by the second computer program codes, when the source file passes an examination by the second computer program codes; fourth computer program codes for causing the computer to receive a public key which is either unique to an execution file receiving device or unique to a processor of the execution file receiving device, from the execution file receiving device through the network, when the source file passes an examination by the second computer program codes; fifth computer program codes for causing the computer to encrypt at least a part of the execution file by using the public key received by the fourth computer program codes, when the source file passes an examination by the second computer program codes; and sixth computer program codes for causing the computer to send the execution file encrypted by the fifth computer program codes to the execution file receiving device, when the source file passes an examination by the second computer program codes.

According to another aspect of the present invention there is provided a computer program product for causing a computer to function as an encrypted program distribution device, the computer program product comprising: first computer program codes for causing the computer to receive a source file of a program sent from a source file sending device through a network; second computer program codes for causing the computer to examine the source file received by the first computer program codes; third computer program codes for causing the computer to generate an execution file of the program from the source file examined by the second computer program codes, when the source file passes an examination by the second computer program codes; fourth computer program codes for causing the computer to encrypt at least a part of the execution file by using a prescribed secret key, when the source file passes an examination by the second computer program codes; fifth computer program codes for causing the computer to receive a public key which is either unique to an execution file receiving device or unique to a processor of the execution file receiving device, from the execution file receiving device through the network, when the source file passes an examination by the second computer program codes; sixth computer program codes for causing the computer to encrypt the prescribed secret key by using the public key received by the fifth computer program codes, when the source file passes an examination by the second computer program codes; and seventh computer program codes for causing the computer to send the execution file encrypted by the fourth computer program codes and the prescribed secret key encrypted by the sixth computer program codes to the execution file receiving device, when the source file passes an examination by the second computer program codes.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

Other features and advantages of the present invention will become apparent from the following description taken in conjunction with the accompanying drawings.
Fig. 1 is a schematic block diagram showing an exemplary configuration of a program distribution system according to the first embodiment of the present invention.
Fig. 2 is a diagram showing an outline of operations in the program distribution system of Fig. 1.
Fig. 3 is a sequence chart showing an outline of operations in the program distribution system of Fig. 1.
Fig. 4 is a flow chart for operations of a distributor system in the program distribution system of Fig. 1.
Fig. 5 is a flow chart for operations of a developer system in the program distribution system of Fig. 1.
Fig. 6 is a flow chart for operations of a user system in the program distribution system of Fig. 1.
Fig. 7 is a diagram showing exemplary information to be submitted from a developer to a distributor in the program distribution system of Fig. 1.
Fig. 8 is a diagram showing one exemplary form of a plaintext loading module to be used by a distributor in the program distribution system of Fig. 1.
Fig. 9 is a diagram showing one exemplary form of an encrypted loading module to be used by a distributor in the program distribution system of Fig. 1.
Fig. 10 is a schematic block diagram showing an exemplary configuration of a program distribution system according to the second embodiment of the present invention.
Fig. 11 is a diagram showing an outline of operations in a program distribution system according to the third embodiment of the present invention.
Fig. 12 is a schematic block diagram showing an exemplary configuration of a program distribution system according to the third embodiment of the present invention.
Fig. 13 is a diagram showing one exemplary form of an encrypted loading module to be used by a distributor in the program distribution system of Fig. 12.
Fig. 14 is a schematic block diagram showing an exemplary configuration of a program distribution system according to the fifth embodiment of the present invention.
Fig. 15 is a diagram showing an outline of operations in the program distribution system of Fig. 14.
Fig. 16 is a diagram showing another exemplary form of an encrypted loading module to be used by a distributor in the program distribution system of Fig. 1.

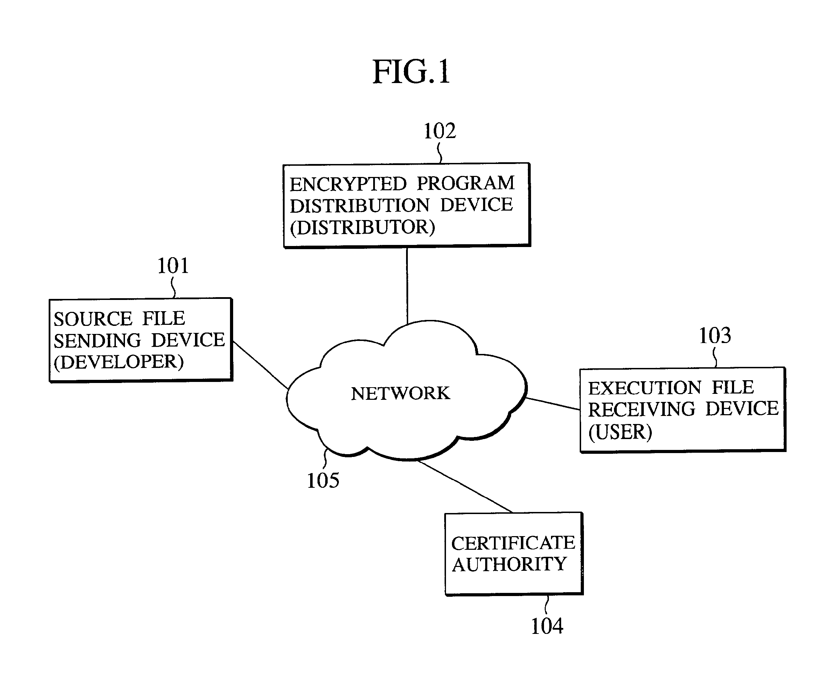

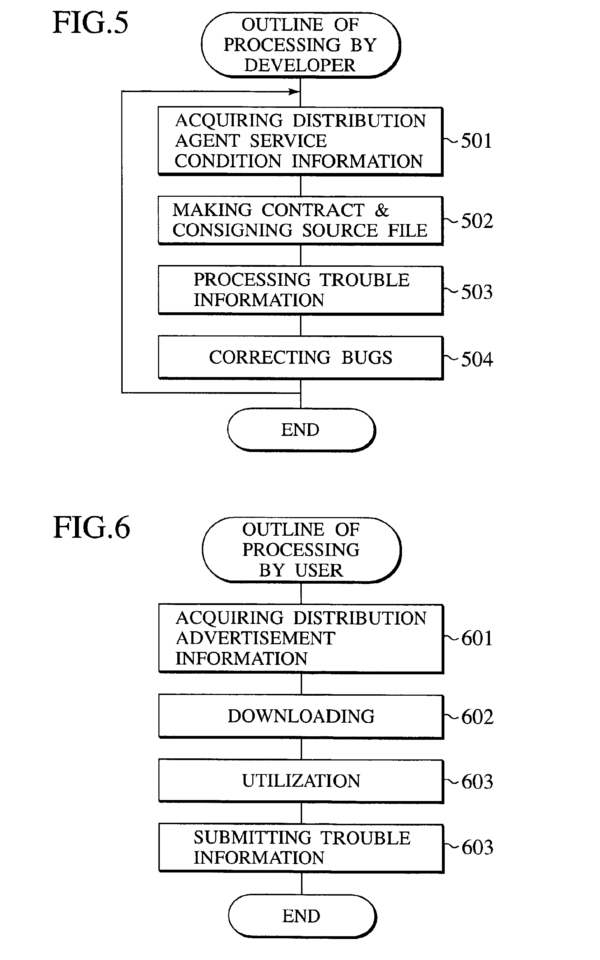

Referring now to Fig. 1 to Fig. 9 and Fig. 16, a program distribution system according to the first embodiment of the present invention will be described in detail.

In Fig. 1, the program distribution system comprises a source file sending device (which will also be referred to simply as developer in the following) 101 which is a computer of a software developer, an encrypted program distribution device (which will also be referred to simply as distributor in the following) 102 which is a computer of a software distributor, an execution file receiving device (which will also be referred to simply as user in the following) 103 which is a computer of a software user, and a certificate authority 104, all of which are connected through a network 105 and capable of carrying out communications each other.

In the case where the network 105 is the Internet, access from the computer to the network can be a direct access or an indirect access via a proxy server or the like.

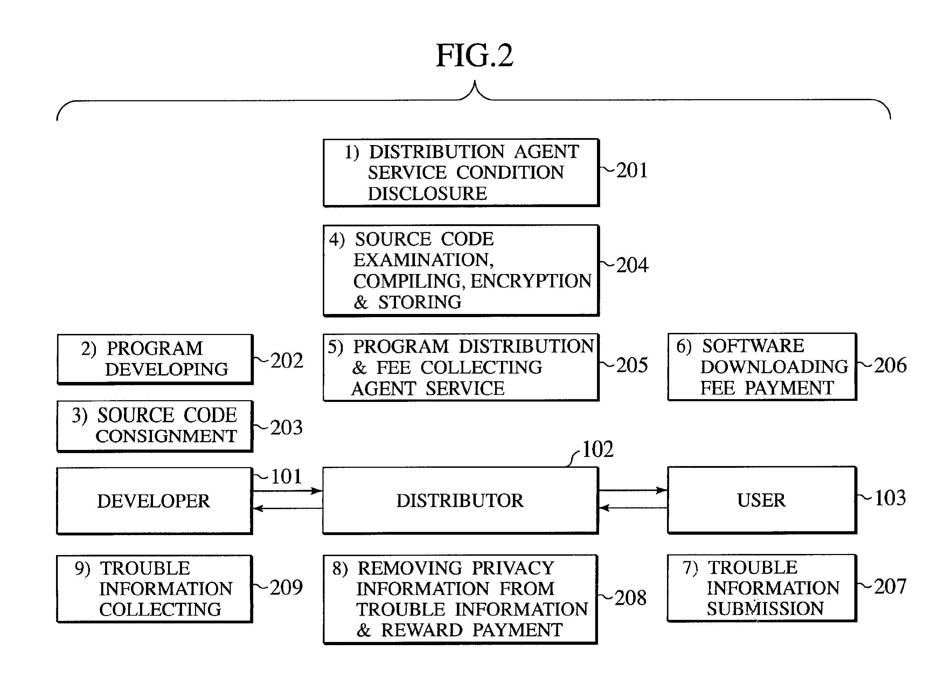

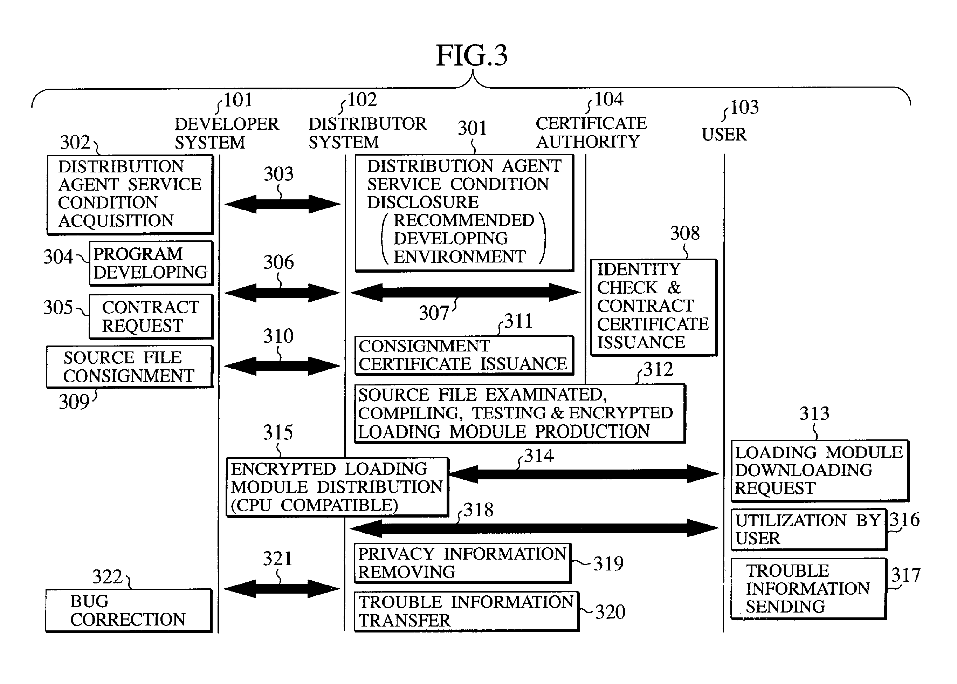

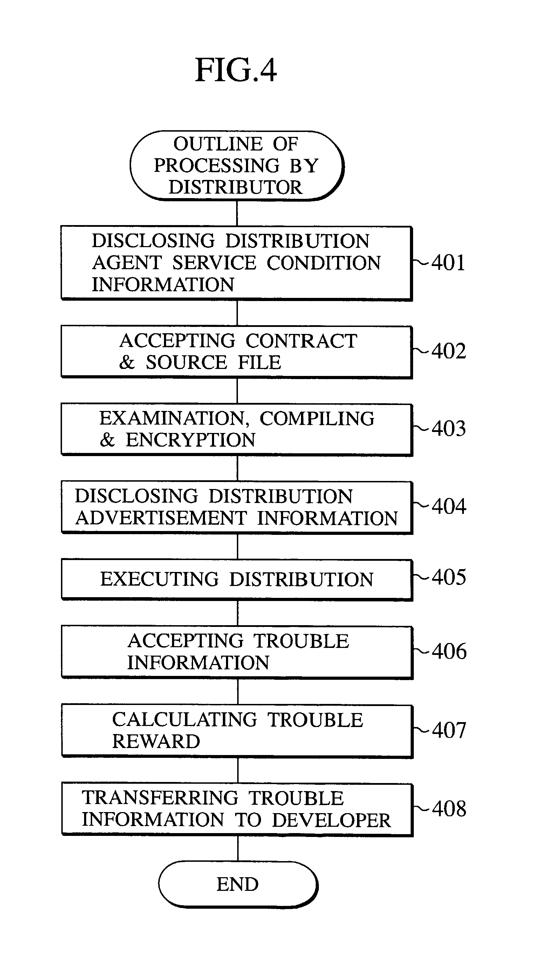

Here, the outline of this embodiment will be briefly described with references to Fig. 2 and Fig. 3. The outlines of the processings by the distributor, the developer, and the user are shown in Fig. 4, Fig. 5, and Fig. 6, respectively.

The distributor is disclosing a guideline for user secret information protection (such as secret information operation rules) (201, 301, 401), and the developer acquires that guideline (302-303, 501) and produces the application program (software) according to that guideline (202, 304).

Then, the developer makes a contract with the distributor on-line (305-308), and consigns the produced source codes to the distributor (203, 309-311, 402, 502). The distributor compiles the program, and produces an encrypted loading module (execution file) (204, 312). The encrypted loading module is encrypted by using an encryption key that is known only to the distributor (403). Also, the source codes are stored at a safe place after the compiling.

The encrypted loading module is distributed to the user by attaching the decryption key corresponding to the CPU of the computer of the user (205-206, 313-315, 404-405, 602). When the user utilizes the distributed program (316, 603) and discovers a trouble in the program, a program image on a memory (trouble information) at a time of the trouble occurrence is sent to the distributor (207, 317-318, 406-407, 603).

The distributor removes information of a portion (secret information storage region) corresponding to the privacy information (secret information) that is reported from the developer in advance from this program image (319), and sends the program image to the developer (208-209, 320-321, 408, 504). The developer carries out the debugging of the program according to this information (322, 504).

When it can be regarded that there is a high probability for the program to be operating illegally, the distributor examines the source file of the program to verify that there is no illegality.

Next, the contract relationship between the distributor and the developer will be described. The distributor is disclosing information such as the moral standard for providing the distribution agent service, the technical guideline for user secret information protection, the contract condition, and program developing environment, via the network. Here, it is assumed that this distribution agent service condition information described in the html format is disclosed through a http server.

The distributor may be capable of handling only a specific program developing environment (Linux, for example), or may be capable of handling a plurality of program developing environments (Linux and Windows, for example) from which any one can be selected. The developer selects the distributor who can handle the preferred program developing environment of the developer from a plurality of distributors.

The developer acquires the distribution agent service condition information by using a web browser, develops the program according to this distribution agent service condition information and prepares materials necessary for the distribution contract.

When the program developing is completed, the developer accesses a web server of the distributor, makes a the distribution contract with the distributor, consigns the source codes of the program, and receives the source code receipt in return.

The contract and the source code consignment are made by a web client, and no special program or server device is required on the developer side. In the contract and the source code consignment, a procedure for guaranteeing the safe exchange of the signed contract terms and source code consignment as described below will be used, but there is no need for the developer himself to be conscious of details of this procedure, and the developer can complete this procedure simply by preparing the source codes, selecting a type of the desired contract on a web browser screen, and sending materials.

The execution of the contract procedure can be realized by the developer by executing a program (Java Script format, for example) provided on the web server of the distributor. 0n the other hand, on the server side, the contract and the source code receiving as well as the subsequent distribution processing are automatically processed, and no human operator intervention is required basically. In the actual system, some operator intervention may be made during the respective procedures according to the need.

When the contract is completed, each of the developer and the distributor exchanges with the other the contract terms signed by the other and shares a contract identifier CID.

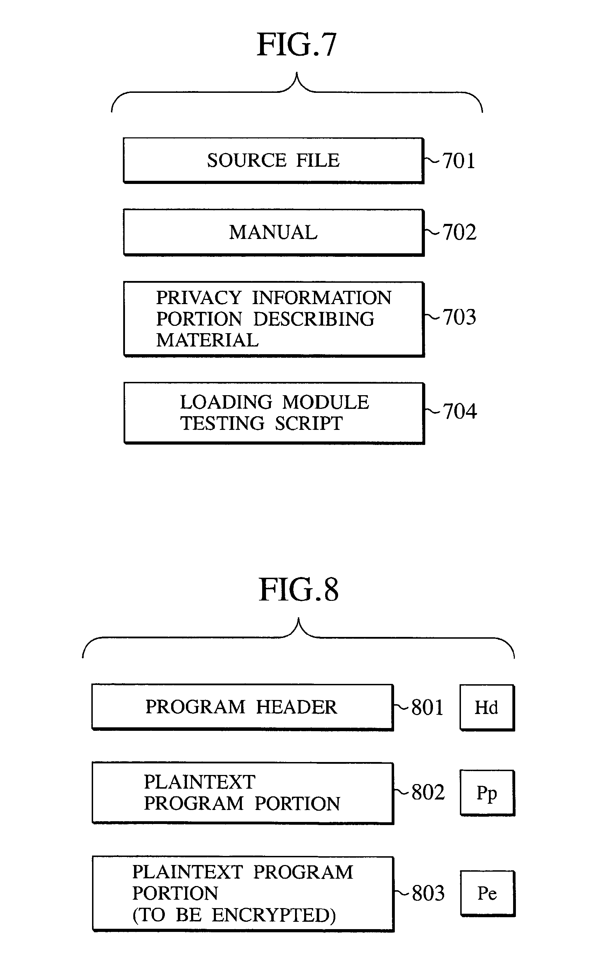

Here, the consignment of the program requires the following materials as shown in Fig. 7.
(1) A source file 701 containing a set of source codes necessary in producing the loading module;
(2) Manual 702;
(3) Privacy information portion describing material 703; and
(4) Loading module testing script 704.

At a time of the contract, the method of the general electronic commerce can be applied. More specifically, the certificate authority can issue in advance a certificate of the public key for certifying the identity of the distributor or the developer, and the distributor or the developer safely manages the own secret key, such that the safety of communications can be maintained by carrying out the appropriate encryption that can enable the receiving of messages only to one who has the secret key.

Also, in exchanging the contract paper, the certificate authority may provide means for simultaneously exchanging the contract paper in order to prevent the fraud. Here, it is assumed that each of the developer, the distributor and the user maintains own secret key safely, and the identity information and the public key corresponding to the secret key are registered at the certificate authority.

As for the certifying procedure, it suffices to realize the simultaneous exchange of the contract paper, and it is not absolutely necessary to assume the existence of the certificate authority, and the known secret information exchange protocol may be utilized. When the exchange of the materials and the signature is completed, the processing is basically carried out within the server of the distributor until the distribution of the loading module.

Next, the examination of the program and the compiling of the program will be described.

The distributor formally examines the consigned program. The examination mechanically extracts a program portion and variables as follows.
(1) A list of variables in the program obtained by urging an input of the privacy information to the user by using the GUI from the program and storing an input result.
(2) A list of variables in the program obtained by acquiring the privacy information of the user by accessing the database or the registry of the system from the program, and storing its result.

A portion at which this information is stored will be removed from the feedback information at a time of feedback of the trouble information as described below. The distributor matches the examination result with the privacy information reported from the developer, and compiles the program if they coincide. If they do not coincide, it is notified as an error to the developer.

Note that there are many other methods for describing the program by which the similar effect as the above described (1) and (2) can be obtained, but here it is assumed that the developer has obligation to use the describing method of a format specified by the distributor in advance in the case of handling the privacy information, according to the contract condition.

If the distributor judges that the developer intentionally concealed the privacy information acquisition, this is construed as the contract violation so that the subsequent processing is discontinued and the processing at a time of the contract violation as defined in the contract condition will be carried out.

Next, when the examination is completed, the distributor compiles the consigned program to produce the plaintext loading module shown in Fig. 8. The loading module produced at this stage is not yet encrypted.

The execution codes contain a portion (Pe) 803 which is to be encrypted by the subsequent processing and a portion (Pp) 802 which will not be encrypted and which will enable the operation such as relocation at a time of the execution.

Note that the source file is not absolutely necessary for all the programs, and it is also possible to link the loading module with a machine language library whose safety is already verified by the distributor such as the general purpose library function.

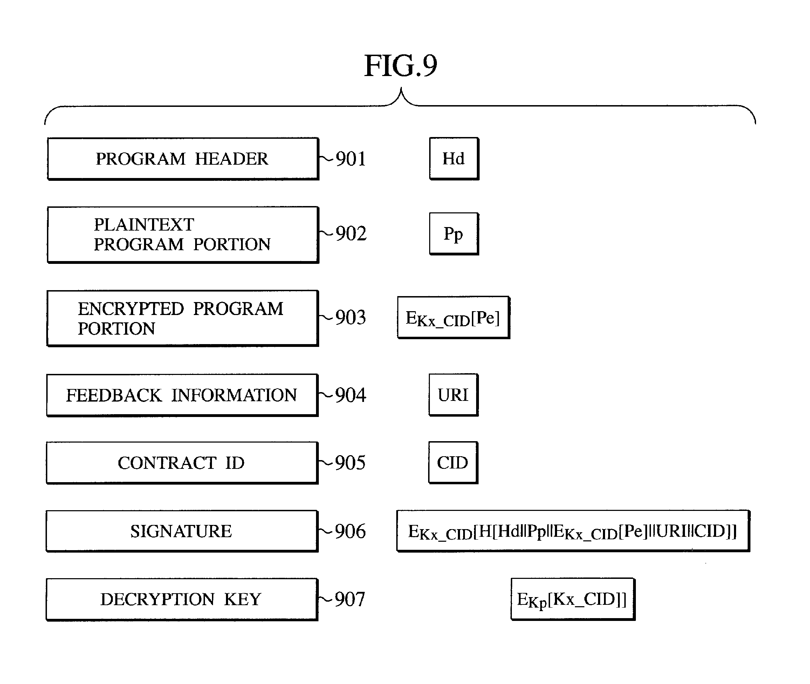

Next, the content of the encrypted loading module is shown in Fig. 9. At a time of producing the encrypted loading module from the plaintext loading module, the encryption target portion (Pe) is encrypted by the secret key encryption algorithm such as DES algorithm, for example, by using the program encryption key (secret key) Kx_CID determined by the distributor with respect to the contract, a feedback information 904 and a contract identifier CID 905 are added, and a signature 906 signed by using the program encryption key Kx_CID on a result of calculating the hash function H[] for the contents 901 to 905, so as to obtain the encrypted loading module. The hash function can be MD5 or SHA1, for example.

The contract identifier CID is used in determining a range for which the privacy information of the user is to be removed by the distributor as described below. The feedback information contains the destination of the trouble information. Here, it is assumed that the destination is described by a URI (Universal Resource Indicator) of the distributor.

The last portion of the loading module is a decryption key 907 which is given by EKp[Kx_CID] obtained by encrypting the program encryption key Kx_CID by the public key algorithm such as RSA algorithm by using the public key Kp of the CPU (such as the tamper resistant processor) of the execution file receiving device (target system) of the user for executing the program.

The processor of the target system internally maintains the secret key Ks corresponding to the public key Kp, so that it can extract Kx_CID by decrypting the decryption key 907 (EKp[Kx_CID]) and execute the encrypted program portion 903 by decrypting it.

On the other hand, the user or the administrator who owns the execution file receiving device (target system) does not know the secret key Ks corresponding to the public key Kp so that the user or the administrator cannot decrypt the encrypted program portion 903 directly. The decryption of the program at the CPU is carried out within the chip so that it is impossible for the user to obtain the decrypted program and therefore the secret of the program can be protected.

Also, in the microprocessor disclosed in the co-pending commonly assigned U.S. patent application serial No. 09/781,284, a protection mechanism for data to be handled by the executed program is also provided so that it is also possible to prevent the user from obtaining the data. These secret protections are based on the secrecy of the program encryption key Kx_CID, which implies that once Kx_CID is known, the recovery of the state before the encryption of the encrypted program portion 903 and the data handled by the program is possible by reading the encrypted program, data, and execution state (register information) in the main memory.

Based on this principle, the analysis of the trouble information to be described below will be carried out. In this way, the secret of the program itself and the data handled by it can be effectively protected from the user of the target system by the use of the encryption, but this in turn eliminates any materials for judging whether or not the program is dangerous to the target system or the user both before and after the execution of the program.

In the present invention, the trustworthy program distributor distributes the already examined program so that there is an effect for eliminating this potential danger to the user. This completes the description of the procedure for compiling the program and producing the encrypted loading module.

Note that, in the case where the compiling fails in the above described procedure, the content of the error is notified to the developer such that the developer will correct the source file and retry the above described procedure starting from the source file consignment (309).

Then, the distributor carries out tests based on the automatic testing script provided by the developer, with respect to each one of the plaintext loading module after the compiling and the encrypted loading module obtained by encrypting the plaintext loading module. If the test result does not satisfy the condition, the content of the error is also notified to the developer so that the developer will correct the source file and retry the above described procedure starting from the source file consignment (309).

The encrypted loading module before the distribution is completed at this point, but it is also possible to carry out the test of the completed loading module by the developer once again. In this case, the encrypted loading module is distributed from the distributor to the developer, and the developer requests the decryption key corresponding to the CPU of the target system for executing the loading module to the distributor.

This procedure is similar to that of the program distribution to the user, which can be realized by a method disclosed in Japanese Patent Application Laid Open No. 10-269078 (1998). After the downloading, the test result obtained by the developer is notified to the distributor, and the distributor proceeds to the processing for distribution to the user next if the notified result indicates that the test is passed, whereas if the test is failed, the developer retries the above described procedure starting from the source file consignment (309).

By this test, the developer can verify the influence of the compiling options and the encryption at the environment of the distributor on the performance of the program by using the same loading module that will actually be given to the user.

Note that the contract between the distributor and the developer is made by steps 305-308, and the distribution agent service fee is also determined there. At this point, it is possible to increase the distribution agent service fee according to the number of times for which the source file consignment was made in order to reflect the server load such as the source file examination and the compiling on the distribution agent service fee.

The distributor may also check that there is no violation of the law and the rules regarding the public order and morals defined by the distributor in the program, by the inspection of the functions and the manual of the program to be done mainly by human inspectors.

After all the inspections are finished in this way, the encrypted loading module, the manual and the encryption key Kx_CID corresponding to the contract are stored at a safe place in the server of the distributor. Here, it is assumed that one program encryption key Kx_CID is issued for each contract.

When the developer wishes to update the program encryption key Kx_CID in order to protect the secret of the program or reflect the trouble correction or the version up of the program on the program to be distributed, the contract will be made again. Of course, it is also possible to set up rules for simplifying the examination or discounting the fee in the case of such a renewal contract.

Next, the distribution of the program will be described.

When the production of the encrypted loading module is completed, the preparation for the distribution will begin in succession. First, the html format description of the downloading screen is prepared.

When a link indicating the downloading of the software corresponding to the contract identifier CID is selected on the downloading screen of the browser, Java Script located at the server specified that link is downloaded to the browser of the user and executed to download the program.

In downloading the program, the program encrypted by using the above described encryption key Kx_CID and the encryption key information E[Kp_u][Kx_CID] obtained by encrypting that encryption key Kx_CID by using the public key Kp_u of the processor of the user side computer 103 must be distributed to the user. Here, E[X][Y] denotes some data Y encrypted by using the key X.

At this point, the public key Kp_u for generating the encryption key information must be one that corresponds to the actually existing processor for the purpose of the program secret protection and the correct program execution. An exemplary method for downloading the program after checking the public key Kp_u of the processor is disclosed in the co-pending commonly assigned U.S. patent application serial No. 09/781,284.

When a link indicating the downloading of the software corresponding to the contract identifier CID is selected on the downloading screen of the browser by the user, Java Script corresponding to it is executed to request the public key of the processor at the user side. On the other hand, the downloading procedure is executed at the distributor side in response to the downloading request issued from Java Script.

When this downloading procedure is completed, the charging processing with respect to the user is executed. There are various known methods for the safe charging processing between the web server and the client, such as that disclosed in Japanese Patent Application Laid Open No. 10-269078 (1998), for example. The charging processing may be started either before or during the downloading processing. Of course, there is no need for the charging processing if the file to be distributed is for free.

Next, the encrypted loading module and the encrypted key information are downloaded, and they are stored as a unified execution file on the user system. At the user system, the encrypted loading module is decrypted and executed by the target system and utilized by the user as disclosed in the co-pending commonly assigned U.S. patent application serial No. 09/781,284.

Next, the method for providing feedback of the bug (trouble) information to the developer when a bug (trouble) is discovered in the distributed program will be described.

The program is usually more likely to contain troubles or the so called bugs when its functions become more complicated. Raising the level of perfection of the program by correcting bugs that occurred in the actual circumstance of the utilization by the user is an indispensable task in order to improve the quality of the program.

The representative method for analyzing the trouble of the program that occurred at a time of the utilization by the user is a method for analyzing the memory image of the program or the so called core dump at a time of the trouble occurrence.

Many OSs are provided with a mechanism for storing the image on the memory into a file and analyzing it when the continuation of the program execution becomes impossible or there is a sign of the trouble such as the reference to improper address. By analyzing the memory image stored in this way, the developer can analyze the cause of the trouble and correct the trouble.

However, this memory image has a possibility for containing information belonging to the privacy of the user such as a personal address book, health condition, credit card number, etc., for example. The handling of the privacy information including such an information should be permitted only to an organization with the social credibility and the strict inspection system, but in general it can be said that it is rather rare for the developer of the good program to have the social credibility and the strict inspection system. Note that the inspection system here refers to the inspection system against the illegal use of the user information, not the audit system of the accounting.

If the memory image is directly sent to the developer, it is impossible to eliminate a possibility for the developer to extract the privacy information of the user contained in the memory image and use it illegally unless the developer has the strict inspection system.

One possible solution is to remove the privacy information at a time of sending the trouble information from the user system. Namely, an information for specifying a region on the memory at which the privacy information of the user is to be stored (which will be referred to as a secret information storage region identifier) is stored in the distributed program in advance, and the program in which the trouble occurred itself or the user system produces the memory image from which the information of that memory region is removed according to the secret information storage region identifier, and sends it to the developer as the trouble information.

This removal is to be done by the user system so that it can be assumed that the user will not intentionally obstruct this removing procedure. However, the correct execution of this removing procedure presupposes the correctness of the secret information storage region identifier. The possibility of the incorrect secret information storage region identifier can be eliminated by requiring the trustworthy program distributor to sign the secret information storage region identifier. The user verifies the signature before the removal of the privacy information, and abandons the trouble information sending if there is alteration.

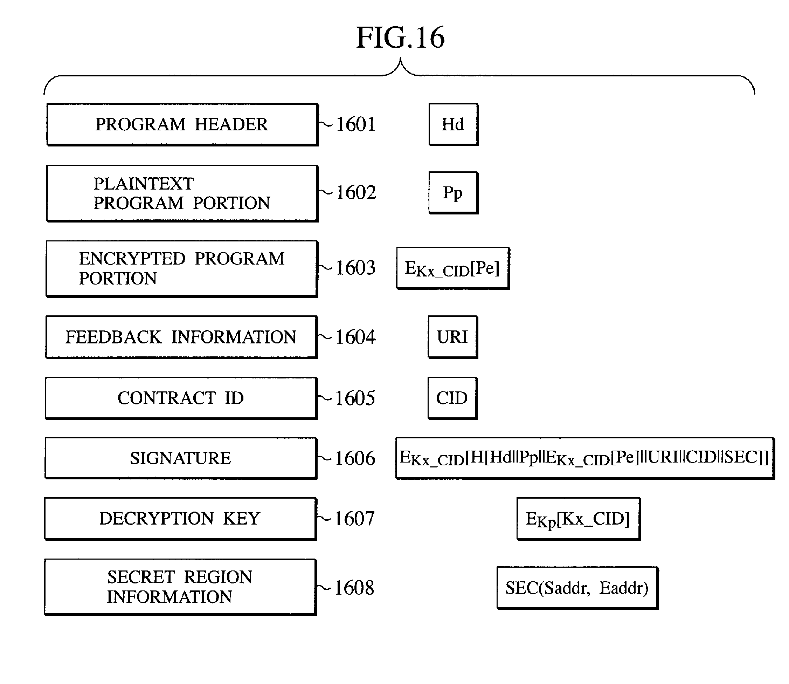

The loading module format in this case is shown in Fig. 16. The secret information storage region identifier (SEC) 1608 is defined as a set of its start address (Saddr) and end address (Eaddr). Then, the alteration of the secret information storage region identifier is prevented by the signature 1606 by the distributor with respect to the entire loading module including the SEC.

Another possible solution is to send the trouble information of the program to the distributor who has the strict inspection system by the following procedure, and transfer the trouble information to the developer after removing the privacy information there.

When the trouble occurs in the operation of the program, the internal state of the program at that time is sent to the distributor by either one of the following two methods.
(1) A method in which the program itself detects the abnormal state and sends the internal state of the program to the distributor.
(2) A method in which the user system sends the program image stored in a memory device to the distributor.

In the method (1), when the trouble is detected, the notification procedure included in the program in advance is called up, and the internal state of the program is sent to the distributor. The destination to be used here is specified by the distributor at a time of compiling the program, so that the internal state will not be sent directly to the developer. The internal state of the program that is encrypted on a memory is sent in a further encrypted form obtained by using the public key of the distributor.

In the method (2), the user system sends the program image to the destination of the feedback information 904. The original program shown in Fig. 9 is to be attached to the program image.

At this point, the signature is verified and whether the destination is correct or not is checked. The program image can be sent more safely by requesting a certificate corresponding to the destination to the certificate authority, and encrypting the program image by using the encryption key of the certificate.

The distributor that received the program image decrypts the encryption applied for the purpose of the network transfer, searches for the encryption key Kx_CID of that program from the database of the distributor according to the contract identifier 905, and decrypts the program and the data. Note here that the program contains the program decryption key 907 compatible with the CPU, but it can be decrypted only by the corresponding processor so that the distributor cannot decrypt it.

Here, the distributor system acquires the location of the privacy information stored in the database according t the contract identifier and removes data of the corresponding portion from the program image by replacing it by values "0", for example.

Then, when the removal of the privacy information is completed, the program image in the encrypted form is sent to the developer. The developer decrypts it by using the own secret key, analyze it, and use it to correct the trouble of the program.

Next, the method of the reward payment with respect to the trouble information will be described.

The developer can pay the reward with respect to the submission of the trouble information by the user in order to collect as many trouble information as possible. The developer submits a definition regarding what reward should be paid with respect to the submission of the trouble information, to the distributor in advance, and makes the contract.

For example, when the trouble information for some software is submitted, the electronic coupon that can be used at the site of the distributor will be given. In other words, the reward may not be given by the actual money. Of course, it is also possible to deposit the reward directly into the bank account, but there is a need to account for the fact that the reward of this kind is usually such a small amount that the handling fee of the bank transaction may possibly be unjustifiable.

Next, the discrimination of the trouble information will be described.

In the case where the reward is a relatively large amount, another problem arises. Namely, there can be users who attempt to obtain many rewards by sending the same trouble information more than once. If such a situation occurs, it would be impossible for the developer to obtain any materials for improving the program despite of the reward payment.

In order to prevent such a situation, it is possible to adopt a method in which the known trouble patterns are stored in the server of the distributor in advance and the reward is reduced in the case where the submitted trouble information corresponds to the known trouble. If it is known that the trouble occurs under certain condition such as when the value of the variable becomes 0, for example, the reward for the trouble information that matches with that condition can be reduced.

Note however that, in this case, it is preferable to post the known trouble information at the server of the distributor in advance and disclose the fact that the reward will be reduced in the case where the submitted trouble information corresponds to the already posted known trouble.

In order to send the trouble information, there is also a burden on the user side such as the occupation of the communication bandwidth at a time of sending the program image or the communication fee. Also, apart from concerns for the privacy information, there can be cases where the sending of the trouble information may be undesirable for the user, as in the case where the program is an editor and the entire document that is currently edited is secret. Thus, in the case of sending the trouble information of the program, it is preferable to obtain the permission of the user before actually sending the trouble information.

Next, the case where the developer makes the version up of the software will be described.

In the case where the developer makes the version up of the software, the contract with the distributor is newly made. At that point, by entering the previous contract ID as an option, it is possible to receive a special handling such as the discount of the distribution agent service fee, and it is also possible to use the same name as the previous version for the identifier (URL) on the screen for explaining the downloading method to the user. The program is compiled again, a new value is allocated to the encryption key Kx_CID in correspondence to the new contract identifier (CID), and the encrypted loading module is produced.

Besides the case of the version up, the contract is newly made when the cryptosystem is cryptoanalyzed. Of course the encryption key Kx_CID of the program is changed in this case.

Apart from these cases, the contract is newly made and the loading module is newly produced in the case of changing the distribution agent service fee or the condition for the charging based on the number of times for use or the charging based on time, etc. However, the loading module will not be changed by the change of the amount of the reward with respect to the feedback information or the exclusion list.

Next, the determination of the encryption key of the program will be described.

In this embodiment, the encrypted program portion 903 is obtained by the encryption using the encryption key Kx_CID that is determined immediately after the completion of the compiling of the program. Thus, if there are downloading requests from a plurality of users, for example, the execution files in which the encrypted program portion 903 is common but the decryption key 908 is different for different target CPUs will be produced and sent to the users.

In this procedure, the encryption processing of the encrypted program portion 903 is carried out only once immediately after compiling the program, and there is no need to repeat the encryption processing again for every downloading request from the user.

However, in practice, the procedure for determining the encryption key Kx_CID and encrypting the program may not necessarily be limited to the above described procedure.

For example, the determination of the program encryption key, the encryption of the encrypted program portion 903 and the production of the decryption key 908 can be carried out after receiving the request for downloading the program from the user.

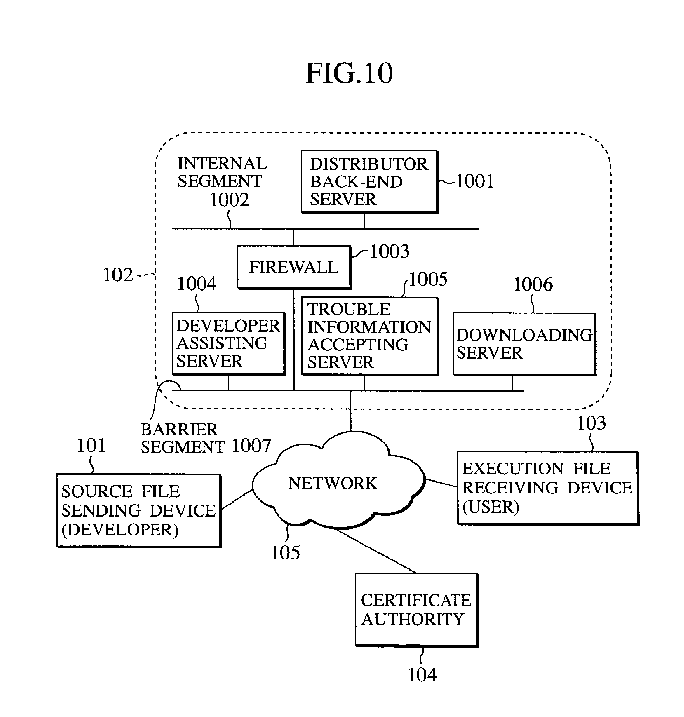

Referring now to Fig. 10, a program distribution system according to the second embodiment of the present invention will be described in detail.

The first embodiment is directed to the exemplary case where the distributor system is directly connected to the public network. In the distributor system of the first embodiment, the source file of the program, the encryption key Kx_CID for encrypting the program, and the information for which the alteration must be prevented including the contract information and the secret information such as the privacy information region on the program are stored.

There is a need to prevent the alteration or the reading out of these informations by attacks through the public network 105.

For this reason, the second embodiment is directed to a configuration shown in Fig. 10 in which the distributor system has front-end and back-end servers separated by a firewall so as to prevent attacks from the network.

The operation in the second embodiment will now be described with reference to Fig. 10. The distributor is disclosing the distribution agent service condition information by using a developer assisting server 1004. The developer 101 carries out the acquisition of the distribution agent service condition information and the contract making by communications with the developer assisting server 1004.

The developer assisting server 1004 internally maintains the distribution agent service condition information, and carries out the distribution independently from the other servers of the distributor. However, the request for the contract from the developer 101 is transferred to the distributor back-end server 1001, and this distributor back-end server 1001 carries out the processing for verifying the identity certificate of the developer 101, confirming the contract condition, and storing the contract paper after the contract is made. The distributor back-end server 1001 is configured to accept only the request from the developer assisting server 1004.

Then, a firewall 1003 that connects a barrier segment 1007 with an internal segment 1002 is configured to transfer only requests from the servers provided in the barrier segment 1007, i.e., the developer assisting server 1004, a trouble information accepting server 1005, and a downloading server 1006. It is not possible to issue any request to the distributor back-end server 1001 directly from outside of the distributor system such as the developer 101 or the user 103.

The distributor back-end server 1001 receives the source file through the developer assisting server 1004, examines and compiles the source file, and encrypts the compiled source file to produce the encrypted loading module that can be distributed. Then, the html document produced for the purpose of the distribution is transferred to the downloading server 1006 and disclosed there.

The user system of the user 103 issues a downloading request for a specified document to the downloading server 1006, and presents the certificate of the public key Kp of the CPU of the user system to the downloading server 1006. The downloading server 1006 transfers the downloading request to the distributor back-end server 1001, and produces a file in which the loading module encryption key EKp[Kx_CID] encrypted by using the public key Kp of the CPU is attached to the encrypted loading module. The downloading server 1006 downloads this file to the user 103.

The user 103 executes the program at the user system and when there is a trouble, the user 103 sends the trouble information to the trouble information accepting server 1005. In the feedback information 904 of the loading module, the URI of the trouble information accepting server 1005 is written.

The trouble information accepting server 1005 sends the trouble information and the source user information to the distributor back-end server 1001, and the distributor back-end server 1001 determines the privacy information region from the contract ID of the trouble information, removes information of that region, and sends the trouble information to the developer 101.

In this way, the servers for directly receiving the requests from outside of the network and the back-end server for maintaining the secret information are separated in the second embodiment, such that the secret information can be managed more safely.

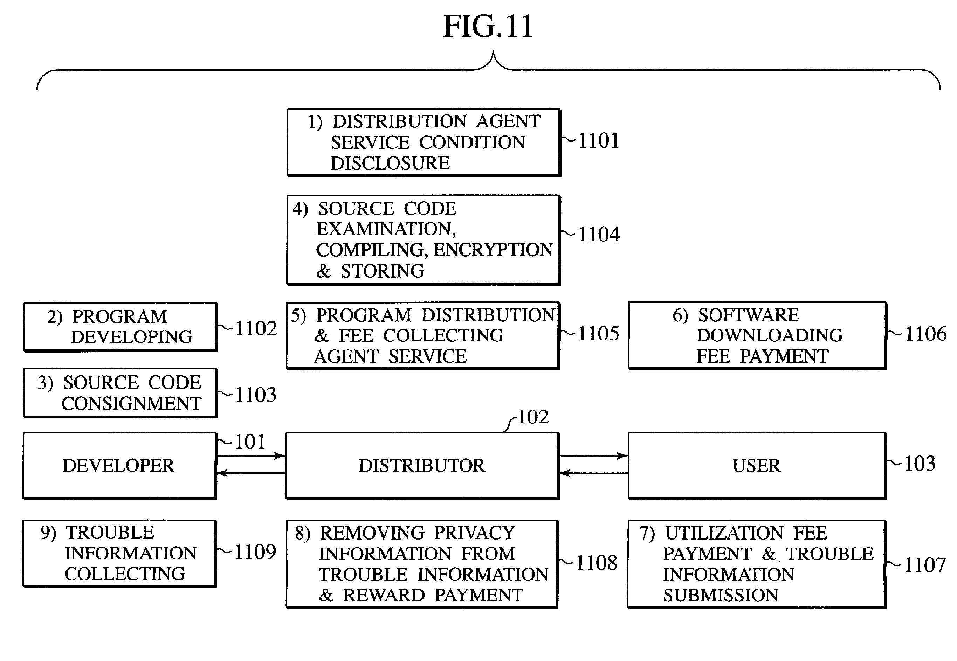

Referring now to Fig. 11 to Fig. 13, a program distribution system according to the third embodiment of the present invention will be described in detail.

Instead of selling the right to utilize the program by the piece, there is a method for collecting the utilization fee according to the number of times for executing the program or the amount of times for which the program is executed. To this end, the system that is both safe and inexpensive to both the program provider side and the user side is desirable. The main purpose for the program providing side is to prevent the illegal use for free, and the main purpose for the user side is to prevent the illegal charging by the third party.

The most simple way for managing the utilization fee is that the program provider operates a server for managing the charging information and makes it impossible for the program to be executed by the user to be operative without accessing the server.

However, this type of system can give rise to the following two concerns to the user side.
(1) It is uncertain whether the charging will be made correctly.
(2) There is a possibility for the software to become inoperative due to the stopping of the charging server.

These are basically concerns related to the reliability of the operation of the charging server, but just as in the case of the inspection system described above, in general the developer of the program cannot be expected to have sufficient experiences and management system for the operation of the server. In order to resolve these problems, the third embodiment is directed to the case where the distributor provides the agent service for managing the charging server on behalf of the developer.

Fig. 11 shows the outline of this embodiment, which differs from Fig. 2 in that the user 103 makes the utilization fee payment along with the trouble information submission at 1107. The operations at 1101-1106 and 1108-1009 are similar to those at 201-206 and 208-209 in Fig. 2.

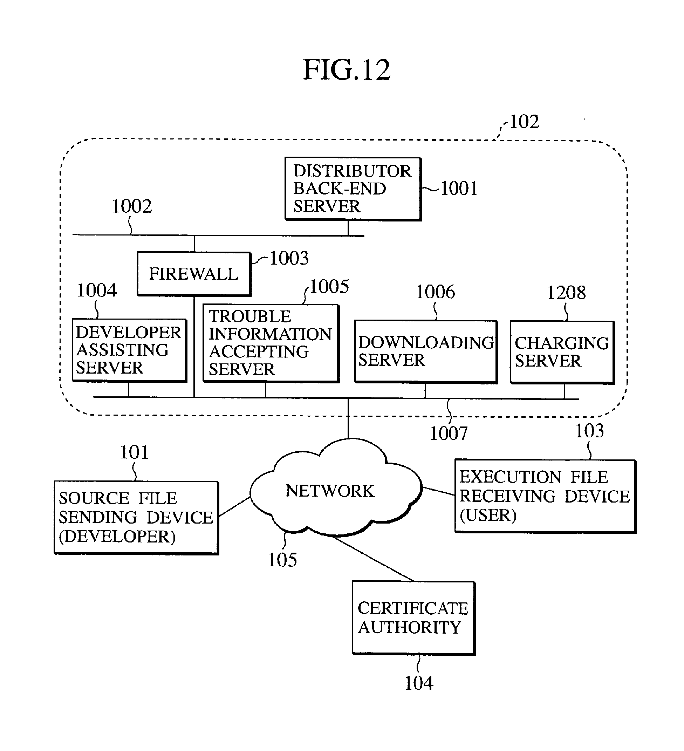

Fig. 12 shows a configuration of the program distribution system in this embodiment, which differs from that of Fig. 10 in that a charging server 1208 is added to the distributor system. In the following, the differences from the first and second embodiments will be mainly described.

First, at a start of the contract, the developer selects the utilization fee collecting agent service and the fee condition as the contract condition. Then, the developer develops the program in such a way that the charging function provided by the distributor will be called up in the program.

The distributor examines the consigned program, and inspects whether the call up of the charging function is carried out correctly or not. When the inspection is passed, the distributor produces the encrypted loading module to which the charging function provided by the distributor is linked. The charging function is placed in a n encrypted region in order to prevent the alteration by the malicious user.

In the notification information for the loading module, the fact that the charging according to the number of times for utilizing the program or the amount of time for utilizing the program will be made is described. At a time of downloading the loading module, the distributor sends a consent form for urging the content to the charging including the charging contract ID to the user, and the user returns that consent form by attaching the signature by using the secret key of the user (not the secret key of the CPU).

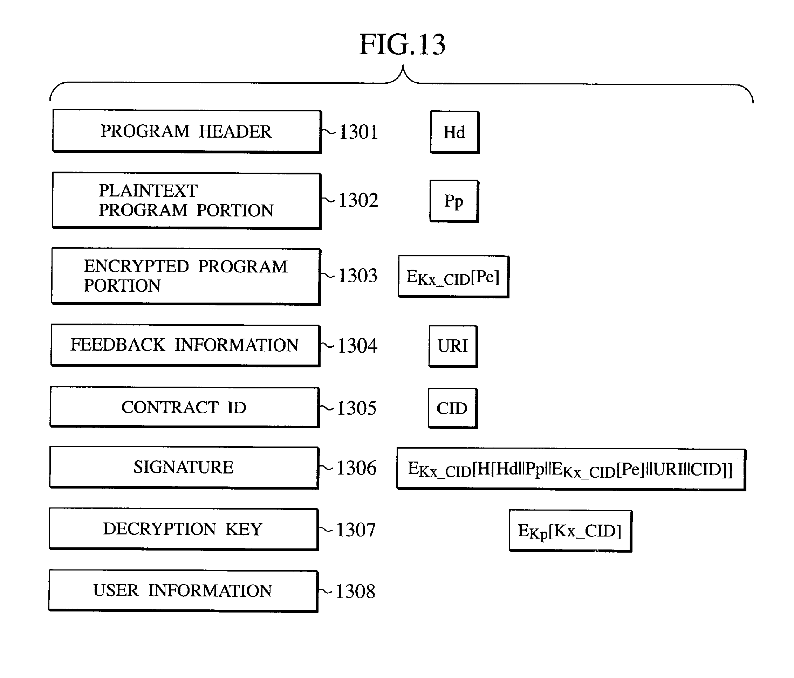

The downloading server 1006 transfers the signature to the distributor back-end server 1001, and the distributor back-end server 1001 produces the encrypted loading module file in a format of Fig. 13 in which a user information 1308 is added to the basic format of the encrypted loading module shown in Fig. 9. The added user information 1308 comprises the charging contract ID and the hash value for the elements 1301 to 1307 and the charging contract ID When the downloaded program is executed and the charging function is called up, the charging function verifies the hash value in the user information 1308, and if it is correct, the access to the charging server 1208 is made, the charging request is made, and the normal execution of the software is continued

If the charging contract is substituted by that for another software or altered, the charging function fails to verify the hash value, so that the execution of the software is stopped. In this way, the intentional avoidance of the charging by rewriting the charging information by the user is prevented.

At the same time, the portions that need to be rewritten for each user in the execution file are limited to just the elements 1306-1308, so that the processing load for the file rewriting by the server side is reduced.

Next, a program distribution system according to the fourth embodiment of the present invention will be described in detail.

Even when the inspection of the program as described above is carried out, it is difficult to completely eliminate the program that steals the secret information of the user. Consequently, it is necessary to provide a mechanism for assisting the resolution of the trouble that occurred when the program is actually used, and this mechanism must be capable of protecting the privacy of the user and the secret of the program of the developer at the same time.

First, the exemplary case where the single distributor carries out the inspection based on data obtained according to the feedback information from the user will be described. In this case, the distributor receives comments or complaints along with the trouble information as the feedback information from the user.

This information is stored in the database within the distributor back-end server. It is also possible to regularly conduct the questionnaire with respect to the users who are using the software, in order to gather in advance complaints such as "I think SPAM (mails such as advertisements that are sent regardless of the desire of the receiver) is increasing recently" and "I feel my personal information has been leaked".

Among these complaints, for those which are malicious and causes can be easily estimated, as in the case where the health condition of the user who is using some health management software is leaked and the direct mails from the medical organizations were received or the application for the life insurance was rejected, the distributor inspects the consigned source codes to check whether there is any suspicious portion. If the privacy information is handled illegally, the distributor stops the distribution and notifies the users.

In general, the relationship between the complaints and the software remains unclear in many cases. Even in such cases, there is a possibility for the software to contain some illegality, so that if there is a correlation between the number of complaints of the same kind and the utilization of the software, the distributor carries out the inspection starting from the software with a higher correlation, so as to realize the management for preventing the distribution of the illegal softwares.

As a method for estimating whether there is a correlation between the number of complaints of the same kind and the utilization of the software, many known methods provided as functions of the current database are available, and their detailed description will be omitted here.

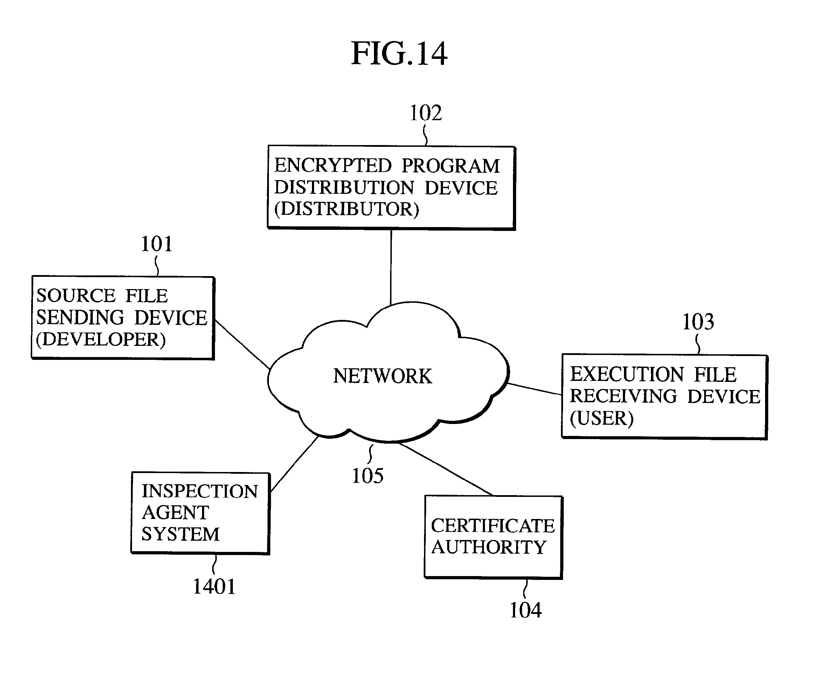

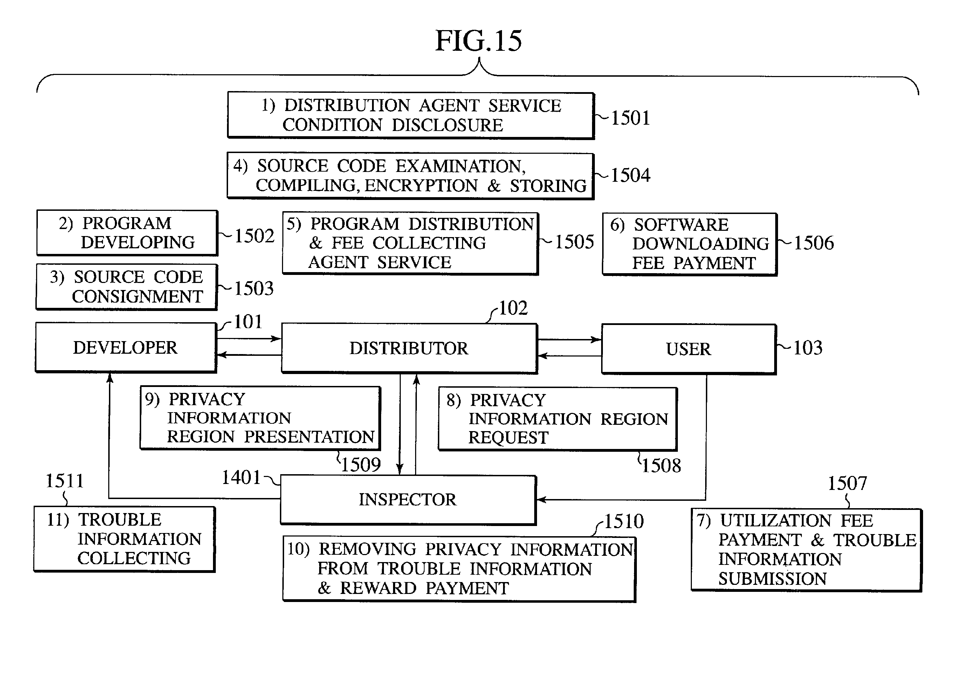

Referring now to Fig. 13 to Fig. 15, a program distribution system according to the fifth embodiment of the present invention will be described in detail.

In the embodiments described above, the software feedback information collecting and the software inspection are carried out by the distributor. However, the software distribution and the software inspection can be tasks with conflicting interests in some cases. For example, when the possibility of the user privacy violation arises for some software from which the distributor has earned considerable amount of the distribution handling fees, it can be easily expected that this distributor will not be very positive about the inspection of that software.

This embodiment is directed to the case where the trouble information is collected by an inspection agent (inspector), which will now be described with references to Fig. 13 to Fig. 15.

Even when the inspection agent is involved, the operations 1501-1506 are the similar to the operations 201-206 of the first embodiment. The only difference is that, when the user request the downloading, the user specifies the inspection agent in the contract and signs the contract by using the secret key.

The distributor produces the encrypted loading module in which the address of the specified inspection agent is stored as the feedback information 1304 in the loading module, and distributes it to the user. The user can select any desired inspection agent from a plurality of inspection agents regardless of who is the distributor.

When the user discovers the trouble, the trouble information is sent to the destination of the feedback information similarly as in the previous embodiments. After that, the inspection agent removes the privacy information by either one of the following two methods.

First, the case where the feedback information is decrypted by the inspection agent will be described. In this case, the inspection agent requests the decryption key corresponding to the contract ID and the information on the privacy information region to the distributor. The inspection agent then decrypts the feedback information, removes the privacy information in the privacy information region, and sends the feedback information to the developer.

In this method, the inspection agent can see all of the plaintext execution codes of the loading module and the privacy information of the user in plaintext form, so that the inspection agent can actively carry out the inspection acts at the machine language level, but the inspection agent is required to handle the program and the privacy information in a strict manner.

Next, the case where the loading module is not decrypted by the inspection agent will be described. In this case, the inspection agent receives only the information on the privacy information region without decrypting the feedback information, and the removal of the privacy information in the privacy information region is carried out in a state where the feedback information remains encrypted.

Consequently, in this case, the locations of variables, the encryption block scheme, and the encryption algorithm need to be selected in advance such that the encryption of the privacy region has no relationship with the other regions.

In this method, the inspection agent cannot read the plaintext machine language program without a help of the distributor, so that the active inspection acts will be limited.

In either method, the circumstantial evidences are collected according to the user's complaints as already mentioned above, and the disclosure of the source file is demanded to the distributor with a significant doubt of the illegality by presenting these circumstantial evidences. The inspection agent may be given a limited right of the enforced investigation, such that the disclosure of the source file can be enforced against the distributor on a basis of the circumstantial evidences.

The inspection agent inspects the disclosed source file, and if the illegality is detected, the inspection agent requires the distributor to stop the distribution and make an announcement to the users. The inspection agent may demand compensation to the developer of that software on behalf of the users without specialized knowledge who received damages by that software.

If it is revealed that there is no illegality in that software as a result of the inspection, the inspection agent pays a prescribed handling fee to the distributor. The inspection agent obviously has an obligation to maintain secrecy of the source file disclosed for the purpose of the inspection.

Next, the right for the reverse engineering will be described.

The right for reverse engineering of the software is widely accepted right for the purpose of sharing the techniques. In particular, the reverse engineering is an indispensable technique in the case of correcting troubles in the software for which the developer of the software has abandoned the maintenance service.

In the case of the so called Y2K program, there were many instances where the computer programs created some 10 to 20 years ago are corrected by the reverse engineering. However, the analysis of softwares for the applications on the tamper resistant microprocessor are cryptographically impossible.

In the tamper resistant microprocessor, it is in principle impossible to analyze the machine language when the source codes are lost as in the case where the developer of the software is disbanded.

It is impractical to restore the plaintext form of the encrypted machine language program by disclosing the secret key of the processor from the processor secret key management organization because that would jeopardize the other programs operating on that processor as well.

In such cases, the source codes consigned to the distributor can be useful. When there is a party that wishes to exercise the maintenance of some software, the source codes are disclosed to the public after confirming that the developer of that software is out of contact.

The party that wishes to exercise the maintenance of the software carries out the maintenance operations according to the disclosed source codes, Also, the distributor discloses the source codes of those softwares for which the protection period according to the copyright law has expired, so as to promote the sharing of the techniques.

By these operations, even in the case of presupposing the use of the tamper resistant microprocessor, the maintenance of the software and the sharing of the techniques can be realized without resorting to the reverse engineering.

As described, according to the present invention, even in the case of distributing the encrypted program to the tamper resistant processor, it becomes possible to secure the safety of the execution file, and it also becomes possible to convey the trouble information such as bug information from the user to the program developer through the program distributor. It also becomes possible to determine the reward to the user who provided the trouble information for the distributed program, on a program by program basis.

It is to be noted that the above described embodiments according to the present invention may be conveniently. implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art.

In particular, the encrypted program distribution device of each of the above described embodiments can be conveniently implemented in a form of a software package.

Such a software package can be a computer program product which employs a storage medium including stored computer code which is used to program a computer to perform the disclosed function and process of the present invention. The storage medium may include, but is not limited to, any type of conventional floppy disks, optical disks, CD-ROMs, magneto-optical disks, ROMs, RAMs, EPROMs, EEPROMs, magnetic or optical cards, or any other suitable media for storing electronic instructions.

It is also to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A program distribution system, comprising a source file sending device, an encrypted program distribution device and an execution file receiving device, which are interconnected through a network;
the source file sending device having:
a first sending unit configured to send a source file of a program to the encrypted program distribution device;
the encrypted program distribution device having:
a first receiving unit configured to receive the source file sent from the source file sending device;
an examination unit configured to examine the source file received by the first receiving unit;
an execution file generation unit configured to generate an execution file of the program from the source file examined by the examination unit, when the source file passes an examination by the examination unit;
a public key receiving unit configured to receive a public key which is either unique to the execution file receiving device or unique to a processor of the execution file receiving device, from the execution file receiving device, when the source file passes an examination by the examination unit;
an encryption unit configured to encrypt at least a part of the execution file by using the public key received by the public key receiving unit, when the source file passes an examination by the examination unit; and
a second sending unit configured to send the execution file encrypted by the encryption unit to the execution file receiving device, when the source file passes an examination by the examination unit; and
the execution file receiving device having:
a public key sending unit configured to send the public key to the encrypted program distribution device;
a second receiving unit configured to receive the execution file sent from the encrypted program distribution device; and
a decryption unit configured to decrypt the execution file received by the second receiving unit by using a secret key corresponding to the public key.

2. The program distribution system of claim 1, wherein the encrypted program distribution device also has a detection unit configured to detect whether the source file violates a secret information handling rules or not according to the secret information handling rules predetermined between the source file sending device and the encrypted program distribution device;
wherein a generation of the execution file by the execution file generation unit, an encryption of the execution file by the encryption unit, and a sending of the execution file by the second sending unit are stopped when the detection unit detects a violation of the secret information handling rules by the source file.

3. The program distribution system of claim 2, wherein the encrypted program distribution device notifies information indicating the violation and/or a failure to the source file sending device when the detection unit detects the violation of the secret information handling rules by the source file and/or when the execution file generation unit fails to generate the execution file from the source file.

4. The program distribution system of any of claims 1 to 3, wherein the source file sending device also has a third sending unit configured to send a region information specifying a secret information region in the execution file of the program to the encrypted program distribution device; and the encrypted program distribution device also has:
a third receiving unit configured to receive the region information; and
a secret information region determining unit configured to determine the secret information region that stores a secret information in the execution file according to the secret information handling rules predetermined between the source file sending device and the encrypted program distribution device and/or the region information.

5. The program distribution system of any of claims 1 to 4, wherein the encrypted program distribution device also has a recording unit configured to record the source file, the execution file, the public key used in encrypting the execution file, and a region information for specifying a secret information region in the execution file in correspondence.

6. The program distribution system of any of claims 1 to 5, wherein the execution file generation unit of the encrypted program distribution device generates functionally equivalent execution files having different machine language instructions at a time of generating the execution file from the source file.

7. The program distribution system of any of claims 1 to 6, wherein the execution file generation unit of the encrypted program distribution device writes an information indicating a destination of a trouble information for the program as a part of the execution file at a time of generating the execution file from the source file.

8. The program distribution system of claim 7 wherein the the destination of the trouble information is the encrypted program distribution device.

9. The program distribution system of any of claims 1 to 9, wherein the execution file receiving device also has a third sending unit configured to send a trouble information regarding the execution file; and
the encrypted program distribution device also has a third receiving unit configured to receive the trouble information sent from the execution file receiving device.

10. The program distribution system of claim 9, wherein the encrypted program distribution system also has a fourth sending unit configured to send the trouble information received from the execution file receiving device to the source file sending device.

11. A program distribution system, comprising a source file sending device, an encrypted program distribution device and an execution file receiving device, which are interconnected through a network;
the source file sending device having:
a first sending unit configured to send a source file of a program to the encrypted program distribution device;
the encrypted program distribution device having:
a first receiving unit configured to receive the source file sent from the source file sending device;
an examination unit configured to examine the source file received by the first receiving unit;
an execution file generation unit configured to generate an execution file of the program from the source file examined by the examination unit, when the source file passes an examination by the examination unit;
a first encryption unit configured to encrypt at least a part of the execution file by using a prescribed secret key, when the source file passes an examination by the examination unit;
a public key receiving unit configured to receive a public key which is either unique to the execution file receiving device or unique to a processor of the execution file receiving device, from the execution file receiving device, when the source file passes an examination by the examination unit;
a second encryption unit configured to encrypt the prescribed secret key by using the public key received by the public key receiving unit, when the source file passes an examination by the examination unit; and
a second sending unit configured to send the execution file encrypted by the first encryption unit and the prescribed secret key encrypted by the second encryption unit to the execution file receiving device, when the source file passes an examination by the examination unit; and
the execution file receiving device having:
a public key sending unit configured to send the public key to the encrypted program distribution device;
a second receiving unit configured to receive the execution file and the prescribed secret key sent from the encrypted program distribution device; and
a first decryption unit configured to decrypt the prescribed secret key received by the second receiving unit by using a secret key corresponding to the public key; and
a second decryption unit configured to decrypt the execution file received by the second receiving unit by using the prescribed secret key decrypted by the first decryption unit.

12. The program distribution system of claim 11, wherein the prescribed secret key is randomly generated according to the program.

13. The program distribution system of either of claims 11 or 12, wherein the encrypted program distribution device also has a detection unit configured to detect whether the source file violates a secret information handling rules or not according to the secret information handling rules predetermined between the source file sending device and the encrypted program distribution device;
wherein a generation of the execution file by the execution file generation unit, an encryption of the execution file by the first encryption unit, an encryption of the prescribed secret key by the second encryption unit, and a sending of the execution file and the prescribed secret key by the second sending unit are stopped when the detection unit detects a violation of the secret information handling rules by the source file.

14. The program distribution system of claim 13, wherein the encrypted program distribution device notifies information indicating the violation and/or a failure to the source file sending device when the detection unit detects the violation of the secret information handling rules by the source file and/or when the execution file generation unit fails to generate the execution file from the source file.

15. The program distribution system of any of claims 11 to 14, wherein the source file sending device also has a third sending unit configured to send a region information specifying a secret information region in the execution file of the program to the encrypted program distribution device; and
the encrypted program distribution device also has:
a third receiving unit configured to receive the region information; and
a secret information region determining unit configured to determine the secret information region that stores a secret information in the execution file according to the secret information handling rules predetermined between the source file sending device and the encrypted program distribution device and/or the region information.

16. The program distribution system of any of claims 11 to 15, wherein the encrypted program distribution device also has a recording unit configured to record the source file, the execution file, the prescribed secret key used in encrypting the execution file, and a region information for specifying a secret information region in the execution file in correspondence.

17. The program distribution system of any of claims 11 to 16, wherein the execution file generation unit of the encrypted program distribution device generates functionally equivalent execution files having different machine language instructions at a time of generating the execution file from the source file.

18. The program distribution system of any of claims 11 to 17, wherein the execution file generation unit of the encrypted program distribution device writes an information indicating a destination of a trouble information for the program as a part of the execution file at a time of generating the execution file from the source file.

19. The program distribution system of claim 18, wherein the the destination of the trouble information is the encrypted program distribution device.

20. The program distribution system of any of claims 11 to 19, wherein the execution file receiving device also has a third sending unit configured to send a trouble information regarding the execution file; and
the encrypted program distribution device also has a third receiving unit configured to receive the trouble information sent from the execution file receiving device.

21. The program distribution system of claim 20, wherein the encrypted program distribution system also has a fourth sending unit configured to send the trouble information received from the execution file receiving device to the source file sending device.

22. The program distribution system of claim 20, wherein the encrypted program distribution device also has a reward determining unit configured to determine a prescribed reward to a user of the execution file receiving device who sent the trouble information.

23. The program distribution system of any of claims 11 to 22, wherein the execution file receiving device also has a third sending unit configured to send a trouble information regarding the execution file; and
the encrypted program distribution device also has:
a third decryption unit configured to decrypt a part of the trouble information sent from the execution file receiving device by using the prescribed secret key corresponding to the execution file;
a removal unit configured to remove a prescribed secret information in a prescribed secret information storage region from the trouble information decrypted by the third decryption unit; and
a third sending unit configured to send the trouble information from which the prescribed secret information is removed by the removing unit, to the source file sending device.

24. An encrypted program distribution device, comprising:
a receiving unit configured to receive a source file of a program sent from a source file sending device through a network;
an examination unit configured to examine the source file received by the first receiving unit;
an execution file generation unit configured to generate an execution file of the program from the source file examined by the examination unit, when the source file passes an examination by the examination unit;
a public key receiving unit configured to receive a public key which is either unique to an execution file receiving device or unique to a processor of the execution file receiving device, from the execution file receiving device through the network, when the source file passes an examination by the examination unit;
an encryption unit configured to encrypt at least a part of the execution file by using the public key received by the public key receiving unit, when the source file passes an examination by the examination unit; and
a sending unit configured to send the execution file encrypted by the encryption unit to the execution file receiving device, when the source file passes an examination by the examination unit.

25. An encrypted program distribution device, comprising:
a receiving unit configured to receive a source file of a program sent from a source file sending device through a network;
an examination unit configured to examine the source file received by the first receiving unit;
an execution file generation unit configured to generate an execution file of the program from the source file examined by the examination unit, when the source file passes an examination by the examination unit;
a first encryption unit configured to encrypt at least a part of the execution file by using a prescribed secret key, when the source file passes an examination by the examination unit;
a public key receiving unit configured to receive a public key which is either unique to an execution file receiving device or unique to a processor of the execution file receiving device, from the execution file receiving device through the network, when the source file passes an examination by the examination unit;
a second encryption unit configured to encrypt the prescribed secret key by using the public key received by the public key receiving unit, when the source file passes an examination by the examination unit; and
a sending unit configured to send the execution file encrypted by the first encryption unit and the prescribed secret key encrypted by the second encryption unit to the execution file receiving device, when the source file passes an examination by the examination unit.

26. A program distribution method in a program distribution system comprising a source file sending device, an encrypted program distribution device and an execution file receiving device, which are interconnected through a network, the method comprising:
(a) sending a source file of a program from the source file sending device to the encrypted program distribution device;
(b) receiving the source file sent from the source file sending device at the encrypted program distribution device;
(c) examining the source file received by the step (b) at the encrypted program distribution device;
(d) generating an execution file of the program from the source file examined by the step (c), at the encrypted program distribution device, when the source file passes an examination by the step (c);
(e) receiving a public key which is either unique to the execution file receiving device or unique to a processor of the execution file receiving device and which is from the execution file receiving device, at the encrypted program distribution device, when the source file passes an examination by the step (c);
(f) encrypting at least a part of the execution file by using the public key received by the step (e), at the encrypted program distribution device, when the source file passes an examination by the step (c);
(g) sending the execution file encrypted by the step (f) from the encrypted program distribution device to the execution file receiving device, when the source file passes an examination by the step (c);
(h) receiving the execution file sent from the encrypted program distribution device at the execution file receiving device; and
(i) decrypting the execution file received by the step (h) by using a secret key corresponding to the public key at the execution file receiving device.

27. A program distribution method in a program distribution system comprising a source file sending device, an encrypted program distribution device and an execution file receiving device, which are interconnected through a network, the method comprising:
(a) sending a source file of a program from the source file sending device to the encrypted program distribution device;
(b) receiving the source file sent from the source file sending device at the encrypted program distribution device;
(c) examining the source file received by the step (b) at the encrypted program distribution device;
(d) generating an execution file of the program from the source file examined by the step (c), at the encrypted program distribution device, when the source file passes an examination by the step (c);
(e) encrypting at least a part of the execution file by using a prescribed secret key, at the encrypted program distribution device, when the source file passes an examination by the step (c);
(f) receiving a public key which is either unique to the execution file receiving device or unique to a processor of the execution file receiving device and which is sent from the execution file receiving device, at the encrypted program distribution device, when the source file passes an examination by the step (c);
(g) encrypting the prescribed secret key by using the public key received by the step (f), at the encrypted program distribution device, when the source file passes an examination by the step (c);
(h) sending the execution file encrypted by the step (e) and the prescribed secret key encrypted by the step (g) from the encrypted program distribution device to the execution file receiving device, when the source file passes an examination by the step (c);
(i) receiving the execution file and the prescribed secret key sent from the encrypted program distribution device at the execution file receiving device;
(j) decrypting the prescribed secret key received by the step (i) by using a secret key corresponding to the public key at the execution file receiving device; and
(k) decrypting the execution file received by the step (i) by using the prescribed secret key decrypted by the step
(j) at the execution file receiving device.

28. A program distribution method, comprising:
(a) receiving a source file of a program sent from a source file sending device through a network;
(b) examining the source file received by the step (a);
(c) generating an execution file of the program from the source file examined by the step (b), when the source file passes an examination by the step (b);
(d) receiving a public key which is either unique to an execution file receiving device or unique to a processor of the execution file receiving device, from the execution file receiving device through the network, when the source file passes an examination by the step (b);
(e) encrypting at least a part of the execution file by using the public key received by the step (d), when the source file passes an examination by the step (b); and
(f) sending the execution file encrypted by the step (e) to the execution file receiving device, when the source file passes an examination by the step (b).

29. A program distribution method, comprising:
(a) receiving a source file of a program sent from a source file sending device through a network;
(b) examining the source file received by the step (a);
(c) generating an execution file of the program from the source file examined by the step (b), when the source file passes an examination by the step (b);
(d) encrypting at least a part of the execution file by using a prescribed secret key, when the source file passes an examination by the step (b);
(e) receiving a public key which is either unique to an execution file receiving device or unique to a processor of the execution file receiving device, from the execution file receiving device through the network, when the source file passes an examination by the step (b);
(f) encrypting the prescribed secret key by using the public key received by the step (e), when the source file passes an examination by the step (b); and
(g) sending the execution file encrypted by the step (d) and the prescribed secret key encrypted by the step (f) to the execution file receiving device, when the source file passes an examination by the step (b).

30. A computer program product for causing a computer to function as an encrypted program distribution device, the computer program product comprising:
first computer program codes for causing the computer to receive a source file of a program sent from a source file sending device through a network;
second computer program codes for causing the computer to examine the source file received by the first computer program codes;
third computer program codes for causing the computer to generate an execution file of the program from the source file examined by the second computer program codes, when the source file passes an examination by the second computer program codes;
fourth computer program codes for causing the computer to receive a public key which is either unique to an execution file receiving device or unique to a processor of the execution file receiving device, from the execution file receiving device through the network, when the source file passes an examination by the second computer program codes;
fifth computer program codes for causing the computer to encrypt at least a part of the execution file by using the public key received by the fourth computer program codes, when the source file passes an examination by the second computer program codes; and
sixth computer program codes for causing the computer to send the execution file encrypted by the fifth computer program codes to the execution file receiving device, when the source file passes an examination by the second computer program codes.

31. A computer program product for causing a computer to function as an encrypted program distribution device, the computer program product comprising:
first computer program codes for causing the computer to receive a source file of a program sent from a source file sending device through a network;
second computer program codes for causing the computer to examine the source file received by the first computer program codes;
third computer program codes for causing the computer to generate an execution file of the program from the source file examined by the second computer program codes, when the source file passes an examination by the second computer program codes;
fourth computer program codes for causing the computer to encrypt at least a part of the execution file by using a prescribed secret key, when the source file passes an examination by the second computer program codes;
fifth computer program codes for causing the computer to receive a public key which is either unique to an execution file receiving device or unique to a processor of the execution file receiving device, from the execution file receiving device through the network, when the source file passes an examination by the second computer program codes;
sixth computer program codes for causing the computer to encrypt the prescribed secret key by using the public key received by the fifth computer program codes, when the source file passes an examination by the second computer program codes; and
seventh computer program codes for causing the computer to send the execution file encrypted by the fourth computer program codes and the prescribed secret key encrypted by the sixth computer program codes to the execution file receiving device, when the source file passes an examination by the second computer program codes.

32. A carrier medium carrying computer readable instructions for controlling the computer to carry out the method of any one of claims 28 or 29.
